# EUROPEAN PATENT APPLICATION

(11) **EP 3 029 281 A1**
(43) Date of publication of application: **08.06.2016**
(21) Application number: 14195703.5
(22) Date of filing: 01.12.2014
(51) Int. Cl.: F01K 21/00, F01K 23/10, F01K 23/18, F02C 6/18

(54) **An aircraft**

(71) Applicant: Airbus Operations GmbH, 21129 Hamburg (DE)
(72) Inventor: Hötzeldt, Stephan, 21129 Hamburg (DE)
(74) Representative: Uexküll & Stolberg

(57) **Abstract**

Described and illustrated is an aircraft (1) comprising a fuselage (3), a wing attached, a jet engine (5), and a heat recovery arrangement (7), the heat recovery arrangement (7) comprising a heat exchanger (19) which is arranged in an exhaust zone (27) of the jet engine (5) for heating a working fluid, an energy converting arrangement (21) received in the fuselage (3) and passed through by the working fluid (31), and a pipe arrangement (23) for recirculating working fluid (31), (21)the energy converting arrangement (21) comprising a turbine (53) driven by the working fluid (31), an energy source (59) driven by the turbine (53), and a condenser (37) for condensing the working fluid (31). The object of the present invention, to provide an aircraft having a possibly small, simple and effective condenser, is achieved in that the condenser (37) comprises a working fluid channel (39) passed through by the working fluid (31), and an air channel (41, 41a, 41b) passed through by cooling air (43), wherein the air channel (41, 41a, 41b) comprises an air inlet (45, 45a, 45b) and an air outlet (49, 49a, 49b), wherein the air inlet (45, 45a, 45b) and the air outlet (49, 49a, 49b) are provided in an outer skin (93) of the fuselage (3), and wherein a fan (117, 119, 121, 123) is provided in the air channel (41, 41a, 41b).

## Description

The present invention relates to an aircraft comprising a fuselage, a wing attached to the fuselage, a jet engine for propelling the aircraft, which is attached to the wing or to the fuselage, preferably outside of the fuselage, and a heat recovery arrangement.

The heat recovery arrangement comprises a heat exchanger, an energy converting arrangement, and a pipe arrangement. The heat exchanger is arranged in an exhaust zone of the jet engine, preferably between a final turbine stage and an exit field of an exit nozzle, such that heat can be exchanged between an exhaust gas stream exiting the jet engine and a working fluid which is passed through the heat exchanger. The energy converting arrangement is received in the fuselage and passed through by the working fluid. The energy converting arrangement comprises a turbine which is driven by the working fluid, in particular by the heat and pressure of the working fluid, an energy source which is driven by the turbine, and a condenser downstream the turbine for condensing the working fluid. The energy source may be formed as a hydraulic fluid pump for providing hydraulic energy, as an air compressor for providing pneumatic energy, as a current generator for providing electric energy, and/or as a rotating shaft for providing rotational energy, i.e. shaft power. The pipe arrangement is configured for recirculating working fluid between the heat exchanger and the energy converting arrangement.

Preferably, the heat recovery arrangement is formed as a Rankine cycle arrangement, wherein the working fluid is a water based working fluid adapted to be evaporated, wherein the heat exchanger is formed as an evaporator for overpressure evaporating the liquid working fluid, wherein the condenser is provided for condensing the expanded vaporous working fluid, wherein the pipe arrangement comprises a vapor pipe section for passing evaporated working fluid from the evaporator to the condenser, and a liquid pipe section for passing condensed liquid working fluid from the condenser to the evaporator, wherein the turbine is formed as a steam turbine which is provided in the vapor pipe section, and wherein the energy converting arrangement comprises a working fluid pump which is provided in the liquid pipe section, for pumping the working fluid through the pipe arrangement and to the evaporator. Preferably, the working fluid pump is driven by the steam turbine. Also preferably, a liquid separator is provided in the vapor pipe section upstream the steam turbine.

The problem of recovering the exhaust heat of a jet engine for an aircraft, which is otherwise lost with the exhaust airstream exiting the jet engine, is long known in the art and several ideas have been presented to address this problem. One is the so called intercooled recuperated aero-engine (IRA), wherein a recuperator is arranged in the exhaust zone of a jet engine, and an intercooler is provided upstream the recuperator. Another one is the so called steam assisted gas turbine engine (SGT) which is disclosed in US 4,333,309, wherein steam boilers are provided in the combustion section, in the turbine section, and in the nozzle section of a jet engine.

However, all these engines are highly complex and introduce considerable additional weight and dimensions, so that commercial application is not soon to be expected.

IPCOM 000228140 D addresses the problem of the high complexity and high additional weight and space requirements of the known recuperated jet engines by a modular heat recovery arrangement comprising a heat exchanger which is located in the exhaust zone of a jet engine, and an energy converting arrangement including a condenser, a turbine, a compressor, and a current generator, which is located in the fuselage and which is connected to the heat exchanger by a pipe arrangement. In such a manner the heaviest, largest, and most complex components of the heat recovery arrangement are excluded from the jet engine and received in the fuselage, namely in a lower deck cargo compartment, where weight, complexity, and space are less a problem.

However, due to the low temperature difference between the working fluid when entering the condenser, and the ambient air, either a cooling fluid colder than the ambient air has to be used, or the dimensions of the condenser have to be considerably big, in order to effectively condense the working fluid. Yet, both of these options are undesired. Using a cooling fluid other than ambient air would introduce additional complexity, and thus, costs and weight. At the same time, the size of the condenser should be as small as possible in order to be able to fit in the cargo compartment and in order to leave as much space as possible for actual cargo in the cargo compartment.

Therefore, the object of the present invention is to provide an aircraft having a possibly small, simple and effective condenser.

This object is achieved in that the condenser comprises a working fluid channel passed through by the working fluid, and an air channel passed through by cooling air, for transferring heat from the working fluid to the cooling air in order to condense the working fluid. Preferably, a plurality of working fluid channels and/or air channels is provided. Preferably, the working fluid channels are formed as pipes to which fins are connected, which fins in turn are positioned in or formed as the air channels, so that heat can be transferred effectively from the working fluid via the pipes and the fins to the cooling air. The air channel comprises an air inlet for passing cooling air from the ambient into the air channel, and an air outlet for passing cooling air from inside the air channel out to the ambient. Preferably, the air inlet and the air outlet are provided in an outer skin of the fuselage. Preferably, a fan is provided in the air channel for moving cooling air from the air inlet to the air outlet.

In such a manner, a high mass flow of cooling air from the ambient can be passed through the condenser, thereby absorbing a considerably high amount of heat from the working fluid within a short time, and thus, increasing efficiency of the condenser. As a consequence the necessary dimensions of the condenser can be reduced without increasing complexity of the condenser or the entire heat recovery arrangement.

According to a preferred embodiment the air inlet and/or the air outlet is provided on a lower side of the fuselage. Alternatively or additionally, it is preferred that the air inlet and/or the air outlet is provided in a belly fairing of the fuselage. In such a way the condenser can be received in the cargo compartment in the lower deck of the fuselage without any additional piping being necessary and a simple structure of the condenser being possible. Also, minimum additional drag is produced.

According to further preferred embodiment an inlet fan is provided at the air inlet for moving cooling air into the air channel, and/or an outlet fan is provided at the air outlet for blowing cooling air out of the air channel. In such a way a high mass flow of cooling air can be passed through the air channel, and said mass flow of cooling air can be kept essentially constant along the air channel between the air inlet and the air outlet.

In particular, it is preferred that the inlet fan and/or the outlet fan can be switched between a fan mode and a turbine mode. In the fan mode it is positioned in the air inlet and/or air outlet and configured for moving cooling air in or out of the air channel. In the turbine mode it is positioned outside the fuselage and configured for being driven by an ambient air flow in order to provide energy to the aircraft. Preferably, the inlet fan and/or the outlet fan is mounted to a pivotable pylon which can be pivoted to move the inlet and/or outlet fan between the position in the air inlet and/or air outlet for the fan mode, and the position outside the fuselage for the turbine mode. In such a manner, in the turbine mode the inlet fan and/or the outlet fan can be operated as ram air turbine (RAT) for providing energy in the case of an engine failure. Any other ram air turbine can be omitted and saved.

According to yet a further preferred embodiment the air inlet is a first air inlet, and a second air inlet for passing cooling air from the ambient into the air channel is provided in the outer skin of the fuselage opposite to, preferably symmetrically to, the first air inlet with respect to a yaw axis of the aircraft. Additionally or alternatively, the air outlet is a first air outlet, and a second air outlet for passing cooling air from inside the air channel out to the ambient is provided in the outer skin of the fuselage opposite to, preferably symmetrically to, the first air outlet with respect to a yaw axis of the aircraft. In such manner, efficiency of the condenser can be increased. Also, the condenser can be formed in a possibly symmetric manner with respect to the yaw axis of the aircraft as an axis of symmetry, so that the weight of the condenser can be balanced. Preferably, in each air inlet and air outlet a fan is provided.

In particular, it is preferred that the condenser comprises a condenser body through which the working fluid channel and the air channel extend. Preferably, the condenser body is formed symmetrically with respect to a yaw axis of the aircraft as an axis of symmetry. In particular, the condenser body is received in a cargo compartment in a lower deck of the fuselage and preferably extends from a first floor support strut on a first lateral side of the cargo compartment, i.e. of the fuselage, to a second floor support strut on a second lateral side of the cargo compartment, i.e. of the fuselage, opposite to the first lateral side. The first and second floor support struts are provided for supporting the passenger floor. Preferably, the condenser body is formed such that it, at least partially, surrounds the turbine and the energy source. This gives protection against noise and a possible burst of the turbine or of the energy source. In such a way the available room in the cargo compartment is utilized in an effective manner, and the weight of the energy converting arrangement can be balanced and minimized. Further, the energy converting arrangement can be received in a standard cargo container.

Further particular, the condenser body is received in an aft cargo compartment in a foremost position next to a wing root of the wing at the fuselage, preferably in the region of the belly fairing. Preferably, the first air inlet and the second air inlet are provided on opposite lateral sides of a lower side of the belly fairing, with respect to the yaw axis of the aircraft. Additionally or alternatively, the first air outlet and the second air outlet are provided on opposite lateral sides of the lower side of the belly fairing, with respect to the yaw axis of the aircraft. In such a manner the distance between the energy converting arrangement and the heat exchanger at the engine, and thus the length of the pipe arrangement, is possibly short. Further, the belly fairing, in particular the lateral sides of the belly fairing, provides enough space to receive first and second air inlets, and first and second air outlets. Also, in such a way the center of gravity of the aircraft is influenced such that a minimum trim drag appears.

In particular, the condenser body, the turbine, and the energy source are received in a removable container which is removably received in the foremost position of the aft cargo compartment of the lower deck of the fuselage between the first and second floor support struts. Preferably, the condenser body can be connected to or disconnected from the first and second air inlets and/or the first and second air outlets. Preferably, the container corresponds to a standard ULD cargo container. In such a way the condenser body together with the turbine and the energy source can be removed from the aircraft, which might be advantageous for various purposes, such as maintenance, replacement by another energy converting arrangement, or replacement by a cargo container. At the same time, first and second air inlets and/or first and second air outlets can remain in the belly fairing and, where necessary, be closed by covers. However, they can also be removed together with the condenser body and the container.

In a preferred embodiment, a working fluid pump is provided in the pipe arrangement upstream the heat exchanger and downstream the condenser. The working fluid pump pumps the working fluid, in particular the liquid working fluid, to the heat exchanger. The working fluid pump is configured to overcome the pressure difference between the heat exchanger and the condenser.

In a further preferred embodiment a liquid separator is provided in the pipe arrangement upstream the turbine and downstream the heat exchanger. The liquid separator extracts the remaining liquid from the wet vaporous working fluid before entering the turbine.

In yet a further preferred embodiment the heat exchanger comprises a starter device for heating, and preferably overpressure evaporating, the working fluid independently of the exhaust gas stream. The starter device is preferably formed as a burner for heating the working fluid by burning a fuel. By the starter device the heat recovery arrangement can be started when the jet engine does not run, e.g. due to engine failure. Further, the energy source may be connected to the jet engine for recirculating energy to the jet engine, i.e. supplying shaft power to the jet engine, either directly or via additional devices, such as an accessory arrangement. In this case an energy recirculation line can be provided for transmitting energy from the energy source to an accessory arrangement of the jet engine. The accessory arrangement in turn can be formed to be driven by said energy from the energy recirculation line, and to supply shaft power to a main engine of the jet engine, e.g. by a hydraulic motor, an accessory turbine, or an electric motor. In such a manner the starter device, when starting the heat recovery arrangement, can also start the jet engine, e.g. after flame out during flight.

In the following a preferred embodiment of the present invention is described in more detail by means of a drawing. The drawing shows in
- Fig. 1: a schematic chart of an embodiment of the aircraft according to the present invention, and
- Fig. 2: a perspective schematic view of an energy converting arrangement provided in a cargo compartment of the aircraft of Fig 1.

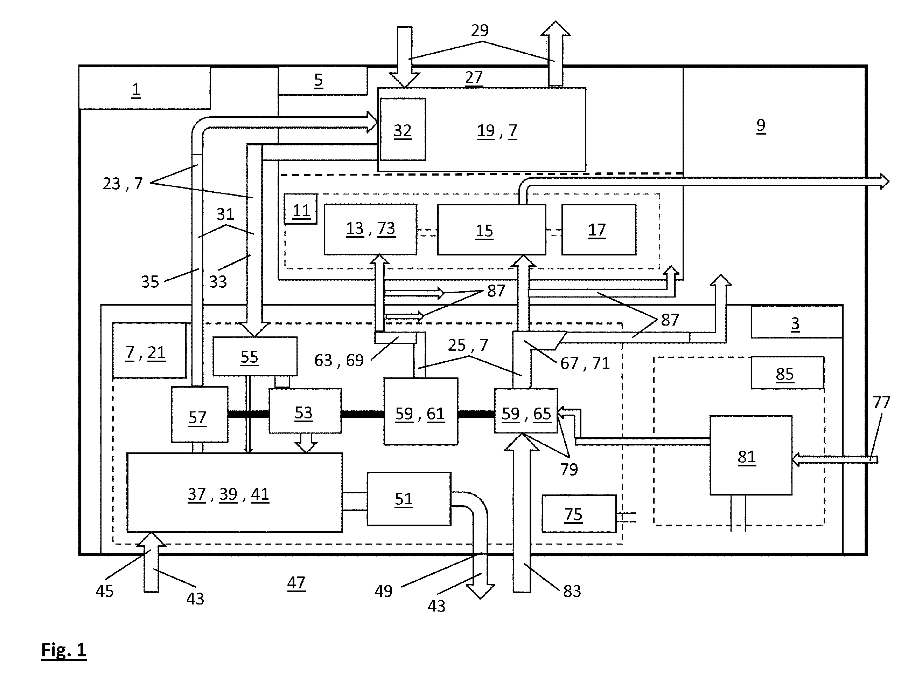

In Fig. 1 an aircraft 1 according to the present invention is illustrated. The aircraft 1 comprises a fuselage 3, a wing (not shown) attached to the fuselage 3, a jet engine 5 attached to the wing or to the fuselage 3, and a heat recovery arrangement 7.

The jet engine 5 comprises a main engine 9 and an accessory arrangement 11. The accessory arrangement 11 comprises an accessory hydraulic pump 13, an accessory turbine 15, and a clutch device 17 for selectively coupling and decoupling shaft power transmission between the accessory arrangement 11, i.e. the accessory hydraulic pump 13 and the accessory turbine 15, and the main engine 9.

The heat recovery arrangement 7 comprises a heat exchanger 19, an energy converting arrangement 21, a pipe arrangement 23, and an energy recirculation line 25. The heat recovery arrangement 7 forms a Rankine cycle for establishing a Rankine process.

The heat exchanger 19 is arranged in an exhaust zone 27 of the main engine 9 such that heat can be exchanged between an exhaust gas stream 29 exiting the main engine 9 and a working fluid 31 passed through the heat exchanger 19. The working fluid 31 is a water based fluid and the heat exchanger 19 is formed as an evaporator for evaporating liquid working fluid 31. The heat exchanger 19 comprises a starter device 32 formed as a burner for heating the working fluid 31 in order to start the heat recovery arrangement 7.

The pipe arrangement 23 is configured for recirculating working fluid 31 between the heat exchanger 19 and the energy converting arrangement 21, and comprises a vapor pipe section 33 passing evaporated working fluid 31 from the heat exchanger 19 to the energy converting arrangement 21, and a liquid pipe section 35 for passing liquid working fluid 31 from the energy converting arrangement 21 back to the heat exchanger 19.

The energy converting arrangement 21 is received in the fuselage 3 and passed through by the working fluid 31. The energy converting arrangement 21 comprises a condenser 37 for condensing the vaporous working fluid 31 into liquid working fluid 31. The condenser 37 comprises a working fluid channel 39 passed through by the working fluid 31, and an air channel 41 passed through by cooling air 43, for transferring heat from the working fluid 31 to the cooling air 43 in order to condense the working fluid 31. The air channel 41 comprises an air inlet 45 for passing cooling air 43 from the ambient 47 into the air channel 41, and an air outlet 49 for passing cooling air 43 from inside the air channel 41 out to the ambient 47. Further, a fan 51 is provided in the air channel 41 for moving the cooling air 43 from the air inlet 45 to the air outlet 49.

The energy converting arrangement 21 further comprises a turbine 53 formed as a steam turbine which is provided in the vapor pipe section 33 upstream the condenser 37, and which is driven by the expanded vaporous working fluid 31. A liquid separator 55 is provided in the vapor pipe section 33 upstream the turbine 53 for de-humidifying the wet vaporous working fluid 31. A working fluid pump 57 is provided in the liquid pipe section 35 downstream the condenser 37, which is driven by the turbine 53 and which pumps the liquid working fluid 31 to the heat exchanger 19 and increases the pressure of the liquid working fluid 31. Further, the energy converting arrangement 21 comprises an energy source 59 which is driven by the turbine 53 and which is formed as a hydraulic fluid pump 61 for moving and increasing the pressure of a hydraulic fluid 63, and an air compressor 65 for providing compressed air 67. The energy recirculation line 25 is provided for transmitting energy from the energy source 59 to the accessory arrangement 11, wherein the energy recirculation line 25 comprises a pressure resistant hydraulic pipe 69 for passing the hydraulic fluid 63 from the hydraulic fluid pump 61 to the accessory hydraulic pump 13 of the accessory arrangement 11, and an air pipe 71 for passing the compressed air 67 from the air compressor 65 to the accessory turbine 15 of the accessory arrangement 11. The accessory hydraulic pump 13 is formed such that it can be operated reversely as a hydraulic motor 73 which is driven by the hydraulic fluid 63 supplied through the hydraulic pipe 69, and which is configured for supplying shaft power to the main engine 9. The accessory turbine 15 is driven by the compressed air 67 supplied through the air pipe 71 and is configured for supplying shaft power to the main engine 9.

Further, a control unit 75 is provided for controlling the heat recovery arrangement 7.

The aircraft 1 also comprises an aerodynamic suction device 77 which is provided at a vertical stabilizer (not shown) for sucking off boundary layer. The suction device 77 is connected to an air entrance 79 of the air compressor 65 via a suction flow adapter 81 in order to provide an underpressure or a vacuum, with respect to an ambient pressure, for supporting the suction device 77. Additionally or alternatively, ambient air is passed through a bypass air supply 83 to the air entrance 79 of the air compressor 65, so that the operation of the air compressor 65 is independent of the operation of the suction device 77. The suction flow adapter 81 is provided in an APU compartment 85 in the fuselage 3.

In the hydraulic pipe 69 and in the air pipe 71 a plurality of energy take-offs 87 are provided in the fuselage 3 as well as at the wing and at the jet engine 5, for bleeding off energy in the form of hydraulic fluid 63 and compressed air 67, and passing said energy to consumer devices (not shown).

The aircraft 1 can be operated in the following manner. When the jet engine 5 runs the heat exchanger 19 overpressure evaporates the working fluid 31, before the overpressure evaporated working fluid 31 is passed through the vapor pipe section 33 to the liquid separator 55, where any remaining liquid is extracted from the wet vaporous working fluid 31. Subsequently, the expanded vaporous working fluid 31 streams through the turbine 53 and drives the turbine 53, whereupon the working fluid 31 having low to ambient pressure is condensed in the condenser 37. In the condenser 37 heat from the working fluid 31 is transferred to the cooling air 43 which is passed through the air channel 41 driven by a fan 51. The condensed liquid working fluid 31 exiting the condenser 37 is pumped back to the heat exchanger 19 by the working fluid pump 57 which in turn is driven by the turbine 53. Also driven by the turbine 53 is the hydraulic fluid pump 61 which pumps the hydraulic fluid 63 through the hydraulic pipe 69 to the accessory hydraulic pump 13, and the air compressor 65 which passes compressed air 67 through the air pipe 71 to the accessory turbine 15. Both, the accessory hydraulic pump 13, which is operated as a hydraulic motor 73, and the accessory turbine 15, supply shaft power to the main engine 9 via the clutch device 17. In such a manner the main engine 9 can be supported by the energy of the exhaust gas stream 29 exiting the main engine 9, which is normally lost to the environment.

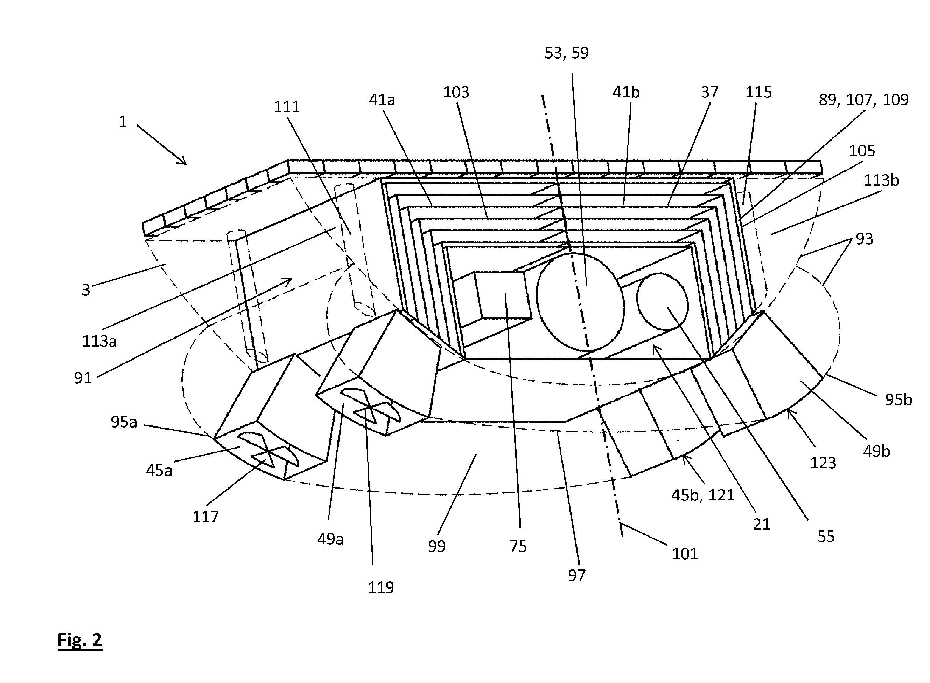

In Fig. 2 the energy converting arrangement 21 is shown as it is received in a cargo compartment 89 of a lower deck 91 of the fuselage 3 of the aircraft 1. The condenser 37 comprises a plurality of working fluid channels 39 passed through by the working fluid 31, and two opposite air channels 41a, 41b passed through by cooling air 43, for transferring heat from the working fluid 31 to the cooling air 43 in order to condense the working fluid 31.

The first air channel 41a comprises a first air inlet 45a for passing cooling air 43 from the ambient 47 into the first air channel 41a, and a first air outlet 49a for passing cooling air 43 from inside the first air channel 41a out to the ambient 47. The second air channel 41b comprises a second air inlet 45b for passing cooling air 43 from the ambient 47 into the second air channel 41b, and a second air outlet 49b for passing cooling air 43 from inside the second air channel 41b out to the ambient 47. The first air inlet 45a and the second air inlet 45b are provided in an outer skin 93 of the fuselage 3 on opposite lateral sides 95a, 95b of a lower side 97 of a belly fairing 99 and of the fuselage 3, with respect to a yaw axis 101 of the aircraft 1. Similarly, the first air outlet 49a and the second air outlet 49b are provided in the outer skin 93 of the fuselage 3 on opposite lateral sides 95a, 95b of the lower side 97 of the belly fairing 99, with respect to the yaw axis 101 of the aircraft 1.

The condenser 37 comprises a condenser body 103 through which the working fluid channels 39 and the air channels 41a, 41b extend, and which can be separated from the air inlets 45a, 45b and the air outlets 49a, 49b. The condenser body 103 together with the turbine 53, the energy source 59, the liquid separator 55, and the control unit 75 are received in a removable standard ULD cargo container 105. The container 105 is received in an aft cargo compartment 107 behind a wing root (not shown) in a foremost position 109 next to the wing root. The container 105 extends from a first floor support strut 111 on a first lateral side 113a of the cargo compartment 89 to a second floor support strut 115 on a second lateral side 113b of the cargo compartment 89 opposite to the first lateral side 113a. Via the container 105, the condenser body 103 can be connected to or disconnected from the first and second air inlets 45a, 45b and the first and second air outlets 49a, 49b. The condenser body 103 is formed such that it partially surrounds the turbine 53, the energy source 59, the liquid separator 55, and the control unit 75.

A first inlet fan 117 is provided at the first air inlet 45a for moving cooling air 43 into the first air channel 41a, and a first outlet fan 119 is provided at the first air outlet 49a for blowing cooling air 43 out of the first air channel 41a. Similarly, a second inlet fan 121 is provided at the second air inlet 45b for moving cooling air 43 into the second air channel 41b, and a second outlet fan 123 is provided at the second air outlet 49b for blowing cooling air 43 out of the second air channel 41b.

## Claims

1. An aircraft (1) comprising:
A fuselage (3),
A wing attached to the fuselage (3),
A jet engine (5) attached to the wing or to the fuselage (3), and
A heat recovery arrangement (7), the heat recovery arrangement (7) comprising:
A heat exchanger (19) which is arranged in an exhaust zone (27) of the jet engine (5) such that heat can be exchanged between an exhaust gas stream (29) exiting the jet engine (5) and a working fluid (31) passed through the heat exchanger (19),
An energy converting arrangement (21) received in the fuselage (3) and passed through by the working fluid (31), the energy converting arrangement (21) comprising a turbine (53) which is driven by the working fluid (31), an energy source (59) which is driven by the turbine (53), and a condenser (37) downstream the turbine (53) for condensing the working fluid (31), and
A pipe arrangement (23) for recirculating working fluid (31) between the heat exchanger (19) and the energy converting arrangement (21),
**Characterized in that**
The condenser (37) comprises a working fluid channel (39) passed through by the working fluid (31), and an air channel (41, 41a, 41b) passed through by cooling air (43), for transferring heat from the working fluid (31) to the cooling air (43),
Wherein the air channel (41, 41a, 41b) comprises an air inlet (45, 45a, 45b) for passing cooling air from the ambient (47) into the air channel (41, 41a, 41b), and an air outlet (49, 49a, 49b) for passing cooling air (43) from inside the air channel (41, 41a, 41b) out to the ambient (47),
Wherein the air inlet (45, 45a, 45b) and the air outlet (49, 49a, 49b) are provided in an outer skin (93) of the fuselage (3), and
Wherein a fan (117, 119, 121, 123) is provided in the air channel (41, 41a, 41b) for moving cooling air (43) from the air inlet (45, 45a, 45b) to the air outlet (49, 49a, 49b).

2. The aircraft according to claim 1, wherein the air inlet (45, 45a, 45b) and/or the air outlet (49, 49a, 49b) is provided on a lower side (97) of the fuselage (3).

3. The aircraft according to claim 1 or 2, wherein the air inlet (45, 45a, 45b) and/or the air outlet (49, 49a, 49b) is provided in a belly fairing (99) of the fuselage (3).

4. The aircraft according to any of claims 1 to 3, wherein an inlet fan (117, 121) is provided at the air inlet (45, 45a, 45b) for moving cooling air (43) into the air channel (41, 41a, 41b), and/or an outlet fan (119, 123) is provided at the air outlet (49, 49a, 49b) for blowing cooling air (43) out of the air channel (41, 41a, 41b).

5. The aircraft according to claim 4, wherein the inlet fan (117, 121) and/or the outlet fan (119, 123) can be switched between a fan mode, where it is positioned in the air inlet (45, 45a, 45b) and/or air outlet (49, 49a, 49b) and configured for moving cooling air (43) in or out of the air channel (41, 41a, 41b), and a turbine mode, where it is positioned outside the fuselage (3) and configured for being driven by an ambient air flow.

6. The aircraft according to any of claims 1 to 5, wherein the air inlet (45) is a first air inlet (45a), and wherein a second air inlet (45b) for passing cooling air (43) from the ambient (47) into the air channel (41, 41a, 41b) is provided in the outer skin (93) of the fuselage (3) opposite to the first air inlet (45a) with respect to a yaw axis (101) of the aircraft (1), and/or
Wherein the air outlet (49) is a first air outlet (49a), and wherein a second air outlet (49b) for passing cooling air (43) from inside the air channel (41, 41a, 41b) out to the ambient (47) is provided in the outer skin (93) of the fuselage (3) opposite to the first air outlet (49a) with respect to a yaw axis (101) of the aircraft (1).

7. The aircraft according to claim 6, wherein the condenser (37) comprises a condenser body (103) through which the working fluid channel (39) and the air channel (41, 41a, 41b) extend,
Wherein the condenser body (103) is received in a cargo compartment (89) in a lower deck (91) of the fuselage (3) and extends from a first floor support strut (111) on a first lateral side (113a) of the cargo compartment (89) to a second floor support strut (115) on a second lateral side (113b) of the cargo compartment (89) opposite to the first lateral side (113a), and
Wherein the condenser body (103) is formed such that it, at least partially, surrounds the turbine (53) and the energy source (59).

8. The aircraft according to claim 7, wherein the condenser body (103) is received in an aft cargo compartment (107) in a foremost position (109) next to a wing root,
Wherein the first air inlet (45a) and the second air inlet (45b) are provided on opposite sides (95a, 95b) of a lower side (97) of the belly fairing (99), with respect to the yaw axis (101) of the aircraft (1), and/or
Wherein the first air outlet (49a) and the second air outlet (49b) are provided on opposite sides (95a, 95b) of the lower side (97) of the belly fairing (99), with respect to the yaw axis (101) of the aircraft (1).

9. The aircraft according to claim 8, wherein the condenser body (103) is received in a removable container (105) which is removably received in the foremost position (109) of the aft cargo compartment (107) of the lower deck (91) of the fuselage (3) between the first and second floor support struts (111, 115), and wherein the condenser body (103) can be connected to or disconnected from the first and second air inlets (45a, 45b) and/or the first and second air outlets (49a, 49b).

10. The aircraft according to any of claims 1 to 9, wherein a working fluid pump (57) is provided upstream the heat exchanger (19) and downstream the condenser (37).

11. The aircraft according to any of claims 1 to 10, wherein a liquid separator (55) is provided upstream the turbine (53) and downstream the heat exchanger (19).

12. The aircraft according to any of claims 1 to 10, wherein the heat exchanger (19) comprises a starter device (32) for heating the working fluid (31) independently of the exhaust gas stream (29).
